# EUROPEAN PATENT APPLICATION

(11) **EP 1 341 391 A1**
(43) Date of publication of application: **03.09.2003**
(21) Application number: 03396014.7
(22) Date of filing: 25.02.2003
(51) Int. Cl.: H04Q 7/22

(54) **Two-way short message service for I-mode**

(30) Priority: 28.02.2002 FI 20020391
(71) Applicant: Sonera Oyj, 00510 Helsinki (FI)
(72) Inventor: Korhonen, Jouni, 11100 Riihimäki (FI); Ala-Luukko, Sami, 00200 Helsinki (FI)
(74) Representative: Simmelvuo, Markku

(57) **Abstract**

The invention relates to the transmission of short messages between two different mobile communication networks. The method and system comprise a gateway GW, on which are stored a number of customer-specific service identifiers and, corresponding to these, the customer's actual address or number in the home network. In addition, the system comprises the equipments of the sending and receiving mobile communication networks. When messages are to be sent to the alien mobile communication network, the customer-specific service identifier constitutes the user identity, which is transmitted as the sender number of the messages. When a response to the message is to be sent, this service number, on the basis of which the message is routed to the gateway GW, which performs the conversions required for the forwarding of the message, such as chopping of the message or removal of special characters, and forwards the message to the target address or number corresponding to the service identifier.

## Description

### FIELD OF THE INVENTION

The present invention relates to telecommunication technology. The present invention concerns a method and system for the transmission of short messages between two different telecommunication networks.

### BACKGROUND OF THE INVENTION

Short messages (SMS, Short Message Service) have become a popular service. In the GSM system (GSM, Global System for Mobile Communications), short messages are transmitted via short message switching centers. Short messages can be sent directly to another terminal or to a server maintained by a service provider, which makes it possible to buy services or products via short message communication. A short message in the GSM system typically contains at most 160 characters, but new terminals are able to form longer messages by combining shorter messages and sending them in sequence. In services associated with the transmission of messages, a short message can be directed e.g. to a telefax or an electronic mail address. Short messages are transmitted on the basis of a subscriber number.

In Japan, the PDC system (PDC, Personal Digital Cellular) is used. For use in connection with the PDC system, a technology called i-mode has been developed, which is a packet-switched system with continuous Internet connection. In this system, users are identified by means of an identification file, a cookie, stored on the terminal. On the basis of the cookie, the i-mode service connects the terminal to the correct mail box. The messages use an address system of the type used in Internet e-mail. Moreover, i-mode messages contain a separate header and an extended character set and they may have a length of 500 characters.

It is possible to send short messages from an i-mode terminal via WWW pages (WWW, World Wide Web). A short message can be sent to an i-mode terminal via a separate service, e.g. m-mail. M-mail is a service that is used to transmit to a mobile phone information regarding e-mail messages received and which makes it possible to respond to them. The problem here is how to answer the messages. In the i-mode system, short messages sent via the WWW can not be answered because the i-mode terminal has no number or address that could be used by the short message switching center (SMSC, Short Message Switching Center) to transmit a short message to a desired service or terminal. Even i-mode services do not necessarily know the telephone number or e-mail address of the i-mode terminal, which is why it is impossible to transmit e.g. forwarding data. For this reason, an e-mail message sent by an m-mail-style service can not be answered from an i-mode terminal unless the GSM user has an Internet e-mail address.

### OBJECT OF THE INVENTION

The object of the invention is to overcome the above-mentioned drawbacks or at least to significantly alleviate them. A specific object of the invention is to disclose a new type of method and system for the transmission of short messages between two different mobile communication networks. The method makes it significantly easier to answer a message received from a mobile communication network of a different type.

### BRIEF DESCRIPTION OF THE INVENTION

The present invention concerns a method and system for the transmission of short messages between two mobile communication networks of different types. The functionality of the invention requires a gateway between the mobile communication networks. In addition, the means for the transmission of messages needed by each network are required. The gateway may be implemented as an independent device or it may be integrated as part of another component.

In the method of the invention, a message is sent from a terminal to a mobile communication network, which transmits the message to a gateway. For example in the case of a GSM network, the message is first transmitted to a short message switching center and from there further to the gateway. To allow forwarding of messages, a number of user-specific service identifiers are stored on the gateway, to which identifiers the message is sent. The service identifier may consist of either a number or some other address, to which the sending mobile communication network is able to send the message. For each service identifier, a forwarding address corresponding to it is provided. On the basis of the forwarding address, the message is transmitted to its destination either directly or e.g. over the Internet. The forwarding address data may consist of e.g. an e-mail address or a subscriber number in a mobile communication network.

If the message properties of the mobile communication networks differ from each other, then the gateway will take care of the required conversions. In a typical case, one of the systems is more sophisticated than the other and messages sent from it have to be formatted in a manner that the less sophisticated system is able to render. In the case of GSM, this means e.g. chopping the messages into units of max. 160 characters.

To answer a message, the receiver has to know the sender's contact address. The gateway converts the sender information into a form that allows the user to answer the message in a normal manner in his/her own system. After the mobile communication network has established that the message must be routed to another mobile communication network, the message is sent to the gateway, which performs the same operations as normally when a message is to be sent.

The system of the invention comprises a sending terminal, a sending mobile communication network, a gateway, a receiving mobile communication network and a receiving terminal.

The method and system of the invention allow easy transmission of messages from a mobile communication network to another in a manner transparent to the user.

### LIST OF FIGURES

In the following, the invention will be described in detail with reference to examples of its embodiments, wherein
Fig. 1 presents an embodiment of the system of the invention,
Fig. 2 presents a signaling diagram representing the process of sending of a message in a system as illustrated in Fig. 1, and
Fig. 3 presents a signaling diagram representing the process of answering a message in a system as illustrated in Fig. 1.

### DETAILED DESCRIPTION OF THE INVENTION

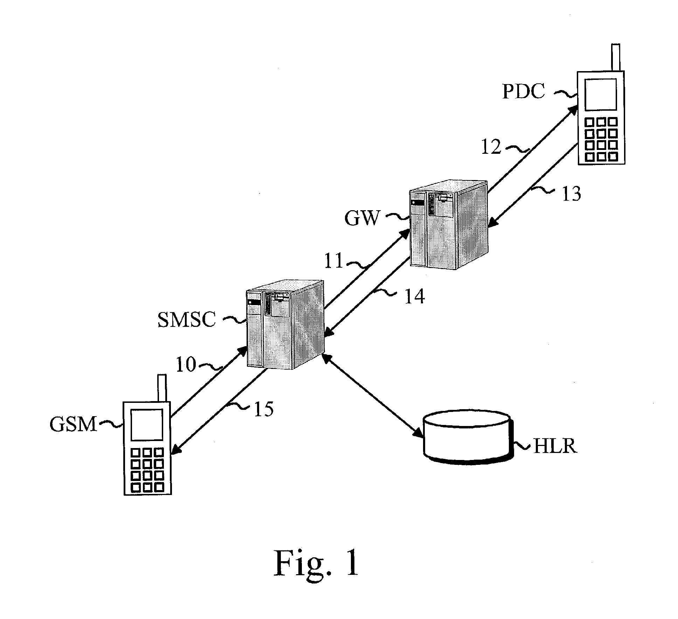

The system illustrated in Fig. 1 comprises a GSM terminal GSM, a short message switching center SMSC, a home location register HLR, a gateway GW and an i-mode terminal PDC. The components of the system are interconnected by a telecommunication connection.

In a preferred embodiment of the system, a short message is sent from a GSM terminal to the short message switching center SMSC. The short message switching center requests the home location register HLR to provide routing instructions for the transmission of the message. If the message is destined to a terminal comprised in the i-mode system, then the home location register HLR will give routing information consisting of the address of the gateway GW.

The message is routed on the basis of previously reserved service numbers. I-mode customers who use the forwarding service have to register as users of the service, thereby receiving a service number to which the address of the device will be linked in the i-mode service. The gateway GW retrieves from a database the forwarding information corresponding to the target number. The gateway GW performs the conversions required for the transmission of the message. When a message is sent from a GSM terminal to an i-mode terminal, no significant changes are needed because short messages in the GSM system are considerably more limited, whereas when a message is sent from an i-mode terminal to a GSM terminal, several conversions have to be carried out. I-mode messages need to be chopped into sections 160 characters long. The separate title of the message must be copied into the message body because short messages in the GSM system do not contain a separate title field. In addition, individual fonts, images and other properties allowed in the messages differ. In the future, GSM terminals will also be able to handle more sophisticated messages, e.g. multi-media messages.

The gateway GW forwards the message to the i-mode service. In the embodiment example, the server providing the i-mode service is implemented in connection with the gateway. If the user has given the address of his/her mailbox in connection with registration, then messages to be read will be retrieved from the mailbox on the server. If the user has not given the location of his/her mailbox in connection with registration, then messages will be sent directly to the terminal by using the push technique. Official i-mode services have access to the identification files or cookies on the basis of which the users are identified. To allow messages to be answered, a SMS service can be implemented on a server e.g. as a form by using the cHTML description language (Compact HyperText Markup Language). On this form is written the MSISDN number (MSISDN, Mobile Subscriber Integrated Services Digital Network) of the target terminal in the GSM network and the message to be forwarded. Messages to be transmitted to the GSM network are identified and routed to the gateway GW. The gateway GW converts the message into an appropriate format and chops it into fragments of 160 characters to allow it to be read by a GSM terminal. After this, the message or messages is/are converted into UCP messages and these are sent to the short message switching center SMSC, which forwards the message normally to a GSM terminal. In place of the sender number, the service number linked to the sender's i-mode address is displayed.

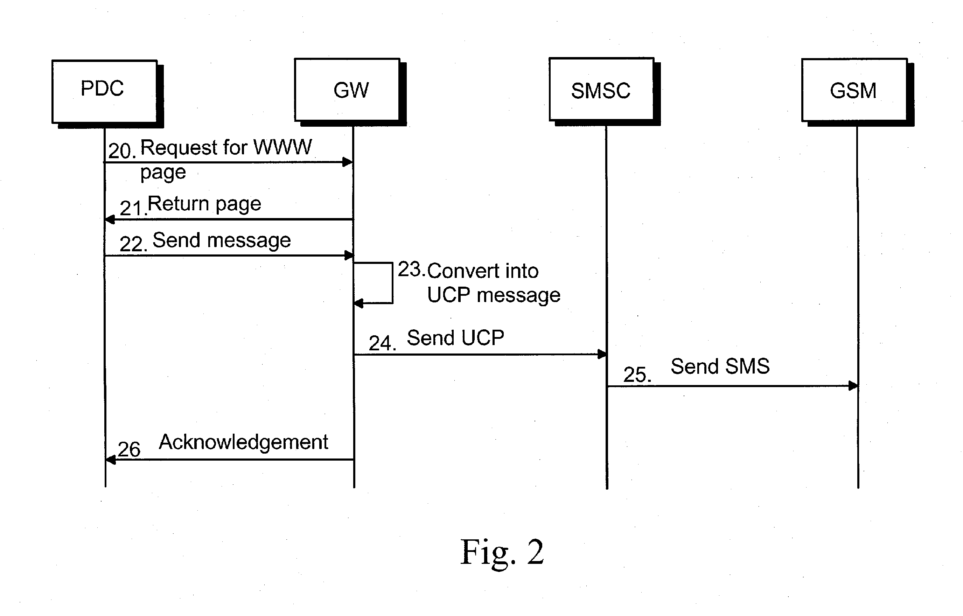

Fig. 2 presents a signaling diagram representing the process of sending a message from an i-mode terminal. In the figure, terminal PDC sends to the gateway GW a cookie and a request for a WWW form. The gateway GW responds 21 by returning the form. After the user has written the message and entered the receiver number, the contents of the form are returned 22 to a service located on the gateway GW. The service generates 23 a UCP message and places the i-mode service number corresponding to the cookie into the sender number field. Next, the gateway GW sends 24 the message to the short message switching center SMSC by using the UCP protocol. The short message switching center SMSC sends 25 the message to terminal GSM. The gateway GW sends an acknowledgement 26 to terminal PDC.

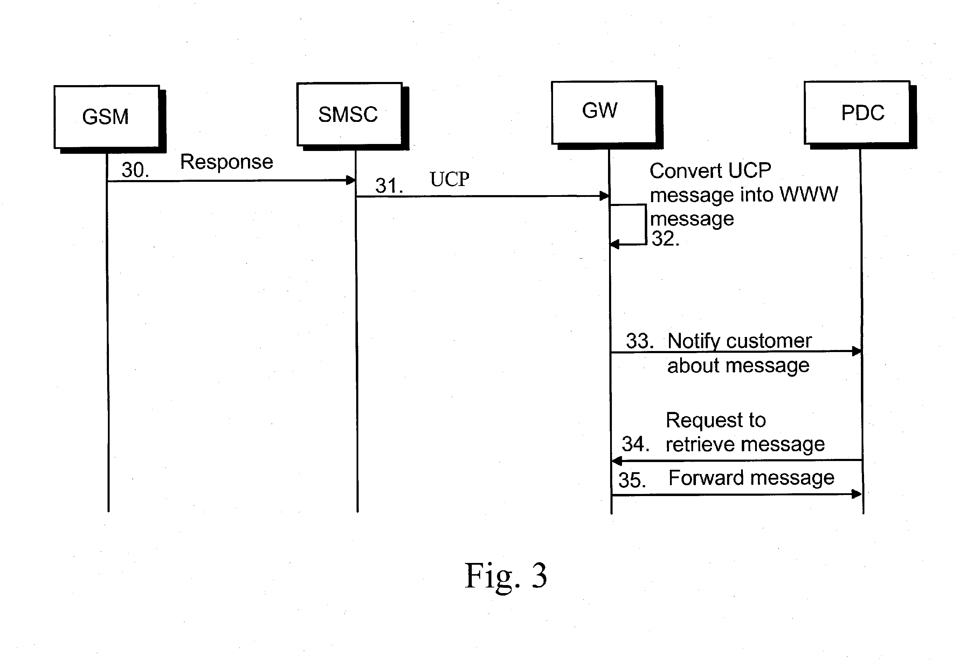

Fig. 3 presents a corresponding diagram representing a situation where a short message is sent from a GSM terminal to an i-mode service. The short message is sent 30 from the GSM terminal. The receiver of the message is given as the customer-specific service number linked to the i-mode service. The short message switching center SMSC forwards 31 the message to the gateway GW by using the UCP protocol. The gateway GW converts 32 the message into a format appropriate to the i-mode service and finds the user corresponding to the service number. After that, the gateway GW notifies 33 the i-mode customer that a message has arrived. The customer sends 24 to the gateway GW a retrieval request and a cookie, on the basis of which the gateway GW identifies the customer. Finally, the contents of the message and the sender's GSM number are sent 35 to the identified customer.

The invention is not limited to the embodiment examples described above; instead, many variations are possible within the scope of the inventive concept defined in the claims.

## Claims

1. Method for the transmission of messages between a first and a second mobile communication network, in which first mobile communication network the user has an individual subscriber identifier while in the second mobile communication network the user has an individual personal service account stored on a server and provided with a subscriber identifier, **characterized in that** one or more subscriber-identifier-like service identifiers are reserved in the first mobile communication network and the subscriber identifier in the second mobile communication network is linked to said service identifier.

2. Method according to claim 1, wherein a message is sent from the first mobile communication network to the second mobile communication network by utilizing a service identifier, **characterized in that** the method further comprises the steps of:
generating the message;
sending the message to a gateway;
converting the message into a form acceptable to the second mobile communication network;
retrieving the receiver's subscriber identifier in the second mobile communication network corresponding to the service identifier in the first mobile communication network; and
forwarding the message to the service account corresponding to the subscriber identifier in the second mobile communication network.

3. Method according to claim 1, wherein a message is sent from the second mobile communication network to the first mobile communication network by utilizing a service identifier of the aforesaid first mobile communication network, **characterized in that** the method further comprises the steps of:
generating the message;
sending the message to the gateway;
setting in the sender field of the message a service identifier of the first mobile communication network that corresponds to a subscriber identifier of the second mobile communication network; and
forwarding the message on the basis of the subscriber identifier of the first mobile communication network to the receiver.

4. Method according to any one of claims 1-3, **characterized in that** the message is chopped to fit the limitations of the message communication system of the target network.

5. Method according to any one of claims 1-3, **characterized in that** special characters are removed from the message as required by the limitations of the message communication system of the target network.

6. Method according to any one of claims 1-3, **characterized in that** the service identifier is a number.

7. Method according to any one of claims 1-3, **characterized in that** the service identifier is an address.

8. Method according to any one of claims 1-3, **characterized in that** each service identifier is associated with an actual number or address in the target network.

9. Method according to claims 1 and 2, **characterized in that** the sender data transmitted is the actual number or address of the source terminal.

10. Method according to claims 1 and 3, **characterized in that** the sender data transmitted is the service identifier of the source terminal.

11. Method according to claim 1, **characterized in that** the message transmitted to the target terminal is an actual message.

12. Method according to claim 1, **characterized in that** the message transmitted to the target terminal is a link to an actual message stored on a server.

13. Gateway for the transmission of messages between two different mobile communication networks, in which first and second mobile communication networks the subscriber identifiers are of different form, **characterized in that** one or more service identifiers resembling a subscriber identifier in the first mobile communication network are reserved for the gateway and a subscriber identifier in the second mobile communication network is linked to said service identifier.

14. Gateway according to claim 13, **characterized in that**, when a message is to be sent from the first mobile communication network, the gateway sets as sender identification data the actual subscriber identifier used in the first mobile communication network and sends the message to the receiver using a service identifier defined for the receiver.

15. Gateway according to claim 13, **characterized in that** when a message is to be sent from the second mobile communication network, the gateway sets as sender identification data the service identifier of the first mobile communication network that corresponds to the subscriber identifier in the second mobile communication network and sends the message to the receiver using the subscriber identifier of the first mobile communication network.

16. Gateway according to claim 13, **characterized in that** the gateway has been arranged to convert the message format into a format accepted by the target mobile communication network.

17. System for the transmission of messages between two different mobile communication networks, said system comprising:
the equipment of the sending mobile communication network (GSM, SMSC, HLR);
a gateway (GW); and
the equipment of the receiving mobile communication network (GW, PDC);
**characterized in that** the system further comprises:
means for formatting the message;
means for converting the forwarding address;

18. System according to claim 17, **characterized in that** the gateway (GW) is an independent device.

19. System according to claim 17, **characterized in that** the gateway (GW) is integrated as part of a device in a mobile communication network.

20. System according to claim 17, **characterized in that** the gateway (GW) is provided with means for formatting the message into a form acceptable to the target network.

21. System according to claim 17, **characterized in that** the gateway (GW) is provided with means for converting the forwarding address into a format to which the target network and the terminal used in it are able to transmit a response.
